# FASCICULE DE BREVET EUROPEEN

(11) **EP 3 090 387 B1**
(45) Date de publication et mention de la délivrance du brevet: **04.12.2019**
(21) Numéro de dépôt: 14812527.1
(22) Date de dépôt: 16.12.2014
(51) Int. Cl.: G06K 19/07

(54) **BORNE COMMUNICANTE D'INFORMATION SANS FIL ET DISPOSITIF POUR SA MISE À JOUR**
DRAHTLOSES INFORMATIONSÜBERMITTLUNGSENDGERÄT UND VORRICHTUNG ZUR AKTUALISIERUNG DAVON
WIRELESS INFORMATION COMMUNICATING TERMINAL AND DEVICE FOR ITS UPDATING

(30) Priorité: 17.12.2013 FR 1362825
(43) Date de publication de la demande: 09.11.2016
(73) Titulaire: Blinksight, 14460 Colombelles (FR)
(72) Inventeur: MUTZ, Stéphane, F-14840 Cuverville (FR); MUTZ, Matthieu, F-14000 Caen (FR)
(74) Mandataire: Withers & Rogers
(86) Numéro de dépôt international: PCT/EP2014/077952
(87) Numéro de publication internationale: WO 2015/091473

(56) Documents cités:
- EP-A1- 2 136 321
- FR-A1- 2 888 970
- US-A1- 2004 099 735
- US-A1- 2005 206 503

## Description

L'invention concerne une borne communicante d'information sans fil, ainsi qu'un dispositif de mise à jour d'au moins une borne communicante d'information sans fil.

La borne communicante d'information sans fil peut être par exemple une étiquette électronique de rayon, de telles étiquettes étant destinées à être apposées chacune sur un rayon ou une étagère devant contenir des articles, par exemple pour afficher leur prix de vente, par exemple dans un magasin, un supermarché. La borne communicante d'information sans fil peut également être une balise devant fournir des informations sans fil à l'extérieur, par exemple en étant apposée à proximité d'un objet, tel que par exemple une oeuvre d'art pour renseigner sur celle-ci.

Un des problèmes des bornes communicantes d'information sans fil est leur mise à jour.

Le document US 2004/0099735 concerne une borne communicante selon le préambule de la revendication 1.

Le document US 2005/0206503 concerne une étiquette RFID comportant un émetteur radiofréquence, un émetteur-récepteur ultrasonore, un émetteur optique infrarouge et un récepteur optique infrarouge. L'étiquette a un mode de communication dans lequel son émetteur optique infrarouge ou son émetteur radiofréquence ou son émetteur ultrasonore émet des données enregistrées, lorsqu'elle est en présence d'un signal de commande reçu par son récepteur optique infrarouge ou ultrasonore.

Le document EP-A-2136 321 concerne une étiquette électronique à trois antennes radioélectriques associées respectivement à une fonction anti-vol, à une puce RFID et à un émetteur-récepteur radiofréquence.

Le document FR-A-2 888 970 concerne une étiquette électronique comportant des moyens de lecture des informations contenues dans une puce RFID externe à l'étiquette et une unité de traitement qui commande la lecture de la puce RFID et qui provoque l'affichage des informations de la puce RFID sur l'écran de l'étiquette.

Ainsi, dans le cas des étiquettes électroniques de rayon, tous les magasins sont confrontés au problème d'étiquetage des prix, de leur mise à jour, ainsi que de garantir l'intégrité entre le prix affiché et celui appliqué en caisse. Cette opération est consommatrice de temps et de personnel.

Des solutions d'étiquetage électronique existent et s'appuient sur différentes technologies de transmission de données. Une contrainte important pour ces étiquettes est l'autonomie. Elle requiert donc des solutions très économes en énergie.

Les solutions actuelles sont donc limitées.

De plus, les solutions actuelles ne permettent que peu ou pas d'interactions.

La fréquence de mise à jour est limitée pour économiser les batteries des étiquettes, ce qui empêche de mettre en place des stratégies commerciales de variations dynamiques de prix.

En outre, il peut également arriver que les bornes communicantes d'information sans fil soient mal placées par rapport au produit ou au rayon.

Il faut bien sûr que l'étiquette électronique ou la borne communicante d'information sans fil soit amovible.

On connait des systèmes utilisant des solutions radio à porteuse ou une transmission infrarouge, mais celles-ci sont couteuses en énergie. Le transfert d'informations y est typiquement unidirectionnel et la fréquence de mise à jour est limitée. Cela empêche de vérifier la bonne mise à jour des bornes communicantes d'information sans fil, la mise à jour fréquente ou le retour d'informations (niveau de batterie, besoin de réapprovisionnement).

L'invention vise à obtenir une borne communicante d'information sans fil, ainsi qu'un dispositif de mise à jour d'au moins une borne communicante d'information sans fil, qui pallient les inconvénients de l'état de la technique.

Un autre but de l'invention est d'offrir un ou plusieurs des avantages suivants :
- fiabilité de communication avec les bornes communicantes d'information sans fil,
- association automatique des bornes communicantes d'information sans fil à un objet,
- grande autonomie,
- variation dynamique de l'information fournie vers l'extérieur,
- possibilité de détecter immédiatement la pénurie de produits dans le cas des étiquettes électroniques de rayon.

A cet effet, un premier objet de l'invention est une borne communicante d'information sans fil suivant la revendication 1.

Grâce à l'invention, la borne communicante d'information sans fil peut être localisée avec une faible dépense d'énergie et une bonne fiabilité. Le deuxième signal peut en outre servir d'accusé de réception des premières données et permet de confirmer la bonne mise à jour de la borne communicante d'information sans fil.

Suivant un mode de réalisation de l'invention, la borne comporte une mémoire dans laquelle est enregistré un premier identifiant de la borne, le deuxième signal émis par le deuxième émetteur contenant le premier identifiant de la borne.

Suivant un mode de réalisation de l'invention, la borne comporte une mémoire dans laquelle est enregistré un premier identifiant de la borne,
le premier récepteur est apte à recevoir selon le premier canal de communication déterminé sans fil le premier signal contenant, en plus des premières données, un deuxième identifiant associé aux premières données,
l'unité de commande comportant un moyen pour vérifier si le deuxième identifiant contenu dans le premier signal reçu en association avec les premières données correspond au premier identifiant de la borne, et un moyen pour provoquer, en réponse à la réception des premières données par le premier récepteur:
- dans l'affirmative,
l'enregistrement des premières données associées au deuxième identifiant dans une mémoire,
la génération de la première information en fonction de ces premières données associées au deuxième identifiant dans la mémoire,
la fourniture par l'organe de la première information vers l'extérieur,
l'émission, par le deuxième émetteur, du deuxième signal contenant au moins le premier identifiant de la borne et une indication de mise à jour correcte des premières données,
- dans la négative, ne pas provoquer cet enregistrement, cette génération, cette fourniture et cette émission.

Suivant un mode de réalisation de l'invention, l'unité de commande est configurée pour éteindre le premier récepteur après la durée prédéterminée.

Suivant un mode de réalisation de l'invention, l'unité de commande est configurée pour éteindre le premier récepteur lorsque le premier signal a été reçu par le premier récepteur.

Suivant un mode de réalisation de l'invention, l'unité de commande est configurée pour éteindre le premier récepteur lorsque le premier signal a été reçu par le premier récepteur un nombre de fois supérieur ou égal à un.

Suivant un mode de réalisation de l'invention, la borne comporte un quatrième émetteur et un cinquième récepteur, le quatrième émetteur étant apte à émettre un quatrième signal contenant une deuxième donnée selon un quatrième canal de communication sans fil de type NFC, en réponse à la réception d'un cinquième signal d'interrogation par le cinquième récepteur selon le quatrième canal de communication sans fil de type NFC.

Suivant un mode de réalisation de l'invention, la borne comporte une mémoire apte à enregistrer une deuxième information correspondant au nombre de fois que le quatrième émetteur (B4) émet le quatrième signal et/ou à la deuxième donnée.

Suivant un mode de réalisation de l'invention, la borne comporte un sixième émetteur et un septième récepteur, le sixième émetteur étant apte à émettre un sixième signal contenant une troisième donnée selon un sixième canal de communication sans fil dans la bande de fréquence ISM, pouvant être par exemple de 2.4 GHz à 2.485 GHz, en réponse à la réception d'un septième signal d'interrogation par le septième récepteur selon le sixième canal de communication sans fil dans la bande de fréquence ISM, pouvant être par exemple de 2.4 GHz à 2.485 GHz.

Suivant un mode de réalisation de l'invention, l'organe de fourniture de la première information vers l'extérieur est le deuxième émetteur apte à émettre vers l'extérieur le deuxième signal contenant la première information selon le deuxième canal de communication déterminé sans fil et de type ultra-large bande.

Suivant un mode de réalisation de l'invention, l'organe de fourniture de la première information vers l'extérieur est le quatrième émetteur apte à émettre vers l'extérieur le quatrième signal contenant la première information selon le quatrième canal de communication sans fil de type NFC.

Suivant un mode de réalisation de l'invention, l'organe de fourniture de la première information vers l'extérieur est le sixième émetteur apte à émettre vers l'extérieur le sixième signal contenant la première information selon le quatrième canal de communication sans fil dans la bande de fréquence ISM, pouvant être par exemple de 2.4 GHz à 2.485 GHz.

Suivant un mode de réalisation de l'invention, le deuxième signal et/ou le quatrième signal et/ou le sixième signal comportent au moins une cinquième information choisie parmi :
- une indication de niveau bas de l'alimentation électrique fournie par une source d'alimentation électrique autonome, que comporte la borne,
- une indication qu'un nombre d'émission du deuxième signal et/ou du quatrième signal et/ou du sixième signal dépasse un seuil préenregistré dans la borne.

Un autre objet de l'invention est un dispositif de mise à jour d'au moins une borne communicante sans fil d'information suivant la revendication 15.

Suivant un mode de réalisation de l'invention, le deuxième récepteur comporte au moins une station de base, qui est reliée à un système de localisation permettant de calculer à partir du deuxième signal reçu par la station de base une localisation de la borne.

L'invention sera mieux comprise à la lecture de la description qui va suivre, donnée uniquement à titre d'exemple non limitatif en référence aux dessins annexés, sur lesquels :
- La figure 1 représente un synoptique modulaire d'une borne communicante d'information sans fil sous la forme d'une étiquette électronique de rayon, ainsi que d'un dispositif de mise à jour de celle-ci suivant un mode de réalisation de l'invention,
- La figure 2 représente un synoptique modulaire d'une borne communicante d'information sans fil sous la forme d'une balise communicante, ainsi que d'un dispositif de mise à jour de celle-ci suivant un autre mode de réalisation de l'invention.

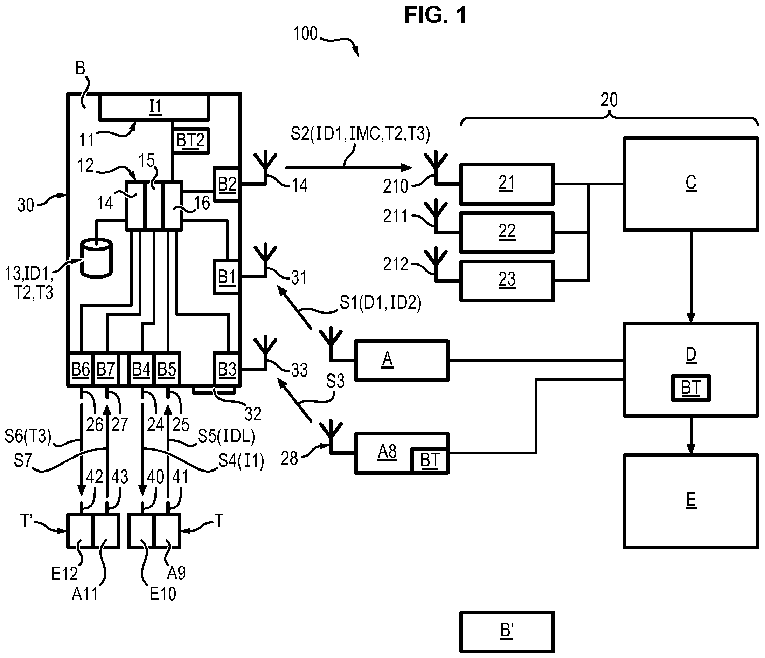

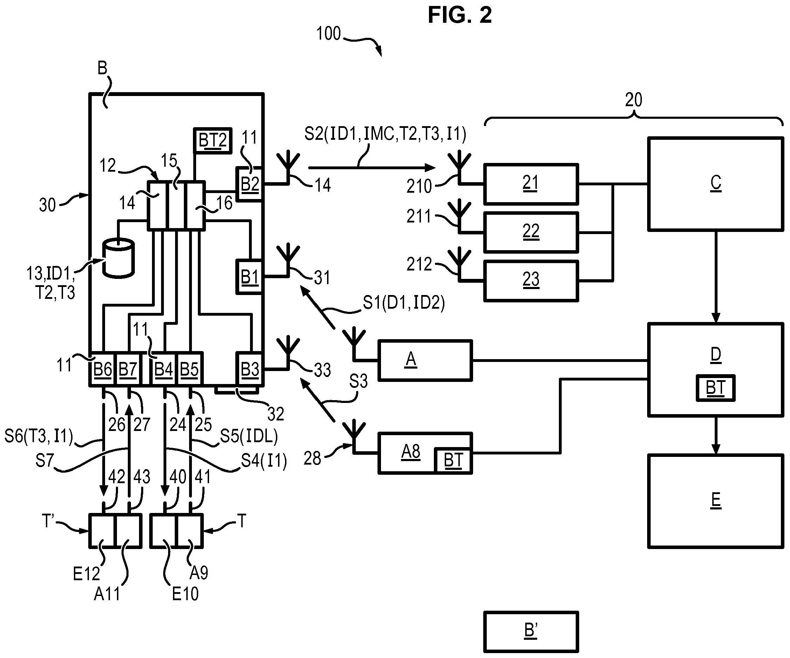

Aux figures 1 et 2 est représentée schématiquement une borne communicante B d'information sans fil. La borne communicante B d'information sans fil comporte un organe 11 de fourniture d'une première information I1 vers l'extérieur. La borne communicante B d'information sans fil comporte un premier récepteur B1 apte à recevoir un premier signal S1 contenant des premières données D1 selon un premier canal de communication déterminé sans fil. La borne communicante B d'information sans fil comporte une unité 12 de commande pour générer la première information I1 à envoyer à l'organe 11 de fourniture en fonction des premières données D1 reçues par le premier récepteur B1.

Suivant l'invention, la borne communicante B d'information sans fil comporte en outre au moins un deuxième émetteur B2 apte à émettre un deuxième signal S2 selon un deuxième canal de communication déterminé sans fil et de type ultra-large bande (ULB ou en anglais : UWB pour *Ultra-Wide Band*)..

Le récepteur B1 est par exemple muni d'une ou plusieurs antennes 31 utilisées pour recevoir, par une liaison radio sans fil, le signal S1. La communicante B d'information sans fil peut comporter un boîtier 30 dans lequel sont logés les parties électroniques formant l'un des, plusieurs des ou tous les éléments 11, 12, 13, 14, 15, 16, B1, B2, B3, B4, B5, B6, B7, 31, 33, 24, 25, 26, 27, BT2 qui seront décrits ci-dessous. La borne communicante B d'information sans fil peut être munie d'un ou plusieurs éléments 32 de fixation, par exemple amovibles, lui permettant d'être fixée de manière amovible à un support, qui est distinct de l'étiquette B, ce ou ces éléments 32 de fixation étant fixés au boitier 30 ou étant solidaires de ce boitier 30.

Dans le mode de réalisation de la figure 1, l'organe 11 de fourniture de la première information I1 vers l'extérieur est ou comprend un écran 11 d'affichage de la première information I1, l'unité 12 de commande étant prévue pour générer la première information I1 à afficher à l'écran 11 en fonction des premières données D1 reçues par le premier récepteur B1. Par exemple, la borne communicante B d'information sans fil est ou comprend une étiquette électronique B de rayon (en anglais : *electronic shelf label*). L'étiquette B est destinée à être apposée ou fixée à un rayon ou une étagère ou un compartiment (désignés globalement par support) devant contenir des articles, des marchandises ou des objets, par exemple pour afficher une information pouvant comprendre un prix de vente ou d'autres informations, cette information étant désignée globalement par I1.

Dans le mode de réalisation de la figure 2, l'organe 11 de fourniture de la première information I1 vers l'extérieur est ou comprend un émetteur B2 et/ou B4 et/ou B6 sans fil de cette première information I1 vers l'extérieur.

Par exemple, dans le mode de réalisation de la figure 2, l'organe 11 de fourniture de la première information I1 vers l'extérieur est ou comprend le deuxième émetteur B2 apte à émettre vers l'extérieur le deuxième signal S2 contenant la première information I1 selon le deuxième canal de communication déterminé sans fil et de type ultra-large bande.

Par exemple, dans le mode de réalisation de la figure 2, l'organe 11 de fourniture de la première information I1 vers l'extérieur est ou comprend le quatrième émetteur B4 apte à émettre vers l'extérieur le quatrième signal S4 contenant la première information I1 selon le quatrième canal de communication sans fil de type NFC.

Par exemple, dans le mode de réalisation de la figure 2, l'organe 11 de fourniture de la première information I1 vers l'extérieur est ou comprend le sixième émetteur B6 apte à émettre vers l'extérieur le sixième signal S6 contenant la première information I1 selon le quatrième canal de communication sans fil dans la bande de fréquence ISM, pouvant être par exemple de 2.4 GHz à 2.485 GHz.

Dans le mode de réalisation de la figure 2, la borne communicante B d'information sans fil est ou comprend par exemple une balise B devant fournir l'information I1 sans fil à l'extérieur, par exemple en étant apposée à proximité d'un objet, pouvant être par exemple une oeuvre d'art (peinture, sculpture ou autres) pour renseigner sur cet objet, l'information I1 émise sans fil par l'émetteur B2 et/ou B4 et/ou B6 vers l'extérieur pouvant avoir un contenu didactique et/ou culturel et/ou pratique et/ou ludique et/ou de géolocalisation

Dans le mode de réalisation de la figure 2, la borne communicante B d'information sans fil n'a par exemple pas d'écran d'affichage comme organe 11 de fourniture de l'information I1 vers l'extérieur.

Aux figures 1 et 2, l'information I1 est destinée à être restituée à un être humain, par tout moyen pouvant être à la figure 1 par exemple un écran 11 de la borne B ou aux figures 1 et 2 un terminal de télécommunication 20 et/ou T et/ou T', qui est distinct de la borne B et qui a reçu l'information I1 en provenance de l'émetteur B2 et/ou B4 et/ou B6 de cette borne B, l'information I1 pouvant être restituée à un être humain sur le terminal 20 et/ou T et/ou T' par une interface visuelle et/ou sonore et/ou olfactive de manière à être perçue par un être humain muni de ce terminal. L'information I1 est une information I1 humaine.

Ci-dessous sont décrits des modes de réalisation de l'invention en référence aux figures 1 et 2.

Suivant un mode de réalisation, le deuxième signal S2 émis par le deuxième émetteur B2 contient un premier identifiant ID1 de la borne B, ce premier identifiant ID1 étant enregistré dans une mémoire 13 de la borne B.

Le dispositif 100 de mise à jour de l'étiquette électronique B de rayon comporte au moins un premier émetteur A pour émettre le premier signal S1 selon le premier canal de communication déterminé sans fil à destination de la borne B communicante d'information sans fil. Le dispositif 100 de mise à jour comporte en outre au moins un deuxième récepteur 20, C, 21, 22, 23 pour recevoir le deuxième signal S2 selon le deuxième canal de communication déterminé sans fil et de type Ultra Large Bande. Le deuxième récepteur 20 est connecté à une unité D de traitement du signal S2 reçu par le deuxième récepteur 20. Le dispositif 100 de mise à jour est prévu notamment pour mettre à jour les informations I1 devant être fournies vers l'extérieur par l'organe 11 de la borne B. Bien entendu, le dispositif 100 de mise à jour peut être prévu pour mettre à jour plusieurs bornes communicantes d'information sans fil B, B', en échangeant avec celles-ci les signaux décrits ci-dessous, les bornes communicantes d'information sans fil B, B' étant distinctes l'une de l'autre, à distance les unes des autres et ayant les moyens décrits pour la borne B communicante d'information sans fil. L'émetteur A est connecté au système D, par exemple de manière filaire.

Suivant un mode de réalisation, le deuxième récepteur 20 comporte au moins une station 21, 22, 23 de base, qui est reliée à un système C de localisation permettant de calculer, à partir du deuxième signal S2 reçu par la station 21, 22, 23 de base, une localisation de la borne B communicante d'information sans fil. Le récepteur 20, ainsi que la ou les stations de base 21, 22, 23 se trouvent à distance de la borne B communicante d'information sans fil. En outre, les stations 21, 22, 23 de base sont à distance les unes des autres.

Dans un mode de réalisation, le récepteur 20 et la ou les station(s) 21, 22, 23 de base sont fixes et sont par exemple disposés dans un bâtiment pouvant être par exemple un entrepôt, un magasin, un supermarché, un musée, une salle d'exposition ou autre.

Suivant un mode de réalisation, l'émetteur B2 est un émetteur radio sans fil et par exemple un émetteur du type RFID. L'émetteur B2 est apte à émettre le deuxième signal S2 à une distance de plusieurs mètres jusqu'au récepteur 20 et/ou station(s) 21, 22, 23 de base.

Le deuxième signal S2 est par exemple impulsionnel. L'émetteur B2 peut être, dans un mode de réalisation, un émetteur utilisant une radio à impulsions. Le deuxième canal de communication déterminé sans fil du type Ultra-Large Bande est par exemple selon la norme IEEE802.15.4a. L'émetteur B2 radio sans fil est par exemple muni d'une ou plusieurs antennes 14, utilisées pour envoyer, par une liaison radio sans fil, le deuxième signal S2 jusqu'au récepteur 20 et/ou à la ou aux station(s) de base 21, 22, 23.

Le deuxième signal S2 permet de déterminer une localisation de la borne B communicante d'information sans fil suivant au moins une coordonnée. Ainsi, dans un mode de réalisation, la borne B communicante d'information sans fil est équipée de l'émetteur B2 localisable en deux ou trois dimensions par la ou les station(s) de base 21, 22, 23 grâce au deuxième signal S2 envoyé de l'émetteur B2 aux stations de base 21, 22, 23. La borne B communicante d'information sans fil est ainsi localisable avec une précision inférieure à 10 centimètres.

Il est par exemple prévu au moins deux stations 21, 22 de base distantes l'une de l'autre, pour pouvoir localiser au moins en deux dimensions l'émetteur B2 et donc la borne B communicante d'information sans fil. Il est par exemple prévu au moins trois stations de base 21, 22, 23, qui sont prévues en des positions par exemple non alignées, pour pouvoir localiser en trois dimensions l'émetteur B2 et donc la borne B communicante d'information sans fil. Il peut également être prévu une seule station de base 21, comportant par exemple un système de mesure d'angle d'arrivée du deuxième signal S2. La ou les stations 21, 22, 23 de base et le système 30 de localisation font par exemple partie d'un système de localisation en temps réel (RTLS pour Real Time Localization System).

Ainsi, le système C calcule, à partir du deuxième signal S2, la localisation de la borne B communicante d'information sans fil. Chaque station 21, 22, 23 de base et/ou chaque récepteur 20 est également muni d'au moins une antenne 210, 211, 212 permettant de recevoir le deuxième signal S2 émis par l'émetteur B2.

Dans le cas d'une étiquette électronique B de rayon, le système D de traitement de données permet de relier la localisation de l'étiquette B avec une zone de stockage d'objets ou de marchandises, à savoir le rayon ou la zone dans laquelle est disposée l'étiquette B et servant à stocker des objets, des produits ou des articles. Ce système D de traitement de données est par exemple un système de gestion de prix et/ou de stock de marchandises. Le système D permet de faire varier l'information I1 devant être affichée vers l'extérieur par l'écran 11 de l'étiquette électronique B de rayon, en envoyant différentes données D1 dans le signal S1.

Dans le cas d'une balise B de la figure 2, le système D permet de localiser et d'identifier chaque balise B. Le système D permet de faire varier l'information I1 devant être émise vers l'extérieur par l'émetteur B2 et/ou B4 et/ou B6 de la borne b communicante sans fil, par le fait que le dispositif 100 envoie différentes données D1 dans le signal S1.

Suivant un mode de réalisation, l'unité 12 de commande de la borne B communicante d'information sans fil est configurée pour provoquer l'émission du deuxième signal S2 par le deuxième émetteur B2 en réponse à la réception du premier signal S1 par le premier récepteur B1. Ainsi, le deuxième signal S2 émis par le deuxième émetteur B2 sert d'accusé de réception du premier signal S1.

Suivant un mode de réalisation, le premier récepteur B1 est apte à recevoir, selon le premier canal de communication déterminé sans fil, le premier signal S1 contenant, en plus des premières données D1, un deuxième identifiant ID2 associé aux premières données D1.

Par exemple, suivant ce mode de réalisation, l'unité 12 de commande comporte un moyen pour vérifier si le deuxième identifiant ID2 contenu dans le premier signal S1 reçu en association avec les premières données D1 correspond au premier identifiant ID1 de la borne B communicante d'information sans fil.

Suivant ce mode de réalisation, l'unité 12 de commande comporte un moyen 14 pour vérifier si le deuxième identifiant ID2 contenu dans le premier signal S1 reçu en association avec les premières données D1 correspond au premier identifiant ID1 de la borne B, et un moyen 15 pour provoquer, en réponse à la réception des premières données D1 par le premier récepteur B1:
- dans l'affirmative,
l'enregistrement des premières données D1 associées au deuxième identifiant ID2 dans une mémoire 13,
la génération de la première information I1 en fonction de ces premières données D1 associées au deuxième identifiant (ID2) dans la mémoire (13),
la fourniture par l'organe 11 de la première information I1 vers l'extérieur,
l'émission, par le deuxième émetteur B2, du deuxième signal S2 contenant au moins le premier identifiant ID1 de la borne B et une indication IMC de mise à jour correcte des premières données D1,
- dans la négative, ne pas provoquer cet enregistrement, cette génération, cette fourniture et cette émission.

Suivant un mode de réalisation, le premier émetteur A, le premier récepteur B1 et le premier canal de communication sont de type radio. Par exemple, le premier récepteur B1 est un récepteur radio basse consommation.

L'utilisation du deuxième émetteur B2 dans le deuxième canal de communication sans fil de type Ultra-Large Bande comme voie de retour S2 représente le triple avantage de permettre de confirmer l'état de la borne B et le succès de la mise à jour de celle-ci, de localiser la borne B et de limiter la consommation en énergie de la borne B pour ces fonctions.

La borne B communicante d'information sans fil comporte une source d'alimentation électrique autonome, par exemple sous la forme d'une pile ou d'une batterie, ou un système de collecte d'énergie, cette source ou ce système permettant à la borne B communicante d'information sans fil d'être alimentée en énergie électrique sans connexion filaire à un réseau d'électricité.

Suivant un mode de réalisation, le premier émetteur A, le premier récepteur B1 et le premier canal de communication sans fil sont de type radio, par exemple ISM à 433MHz ou à 900MHz.

Suivant un mode de réalisation, la borne B communicante d'information sans fil comporte en outre un troisième récepteur B3 pour recevoir selon un troisième canal de communication sans fil un troisième signal S3 de déclenchement, l'unité de commande étant configurée pour mettre en marche pendant une durée prédéterminée le premier récepteur B1 en réponse à la réception du troisième signal S3 de déclenchement par le troisième récepteur B3 et pour éteindre le premier récepteur B1 après la durée prédéterminée. Ainsi, on utilise le troisième récepteur B3 pour signaler à l'étiquette B l'arrivée imminente du premier signal S1 transportant les premières données D1 par un autre mode de transmission.

Suivant un mode de réalisation, la borne B communicante d'information sans fil comporte en outre un troisième récepteur B3 pour recevoir selon un troisième canal de communication sans fil un troisième signal S3 de déclenchement, l'unité de commande étant configurée pour mettre en marche pendant une durée prédéterminée le premier récepteur B1 en réponse à la réception du troisième signal S3 de déclenchement par le troisième récepteur B3 et pour éteindre le premier récepteur B1 lorsque le premier signal S1 a été reçu par le premier récepteur B1.

Suivant un mode de réalisation, la borne B communicante d'information sans fil comporte en outre un troisième récepteur B3 pour recevoir selon un troisième canal de communication sans fil un troisième signal S3 de déclenchement, l'unité de commande étant configurée pour mettre en marche pendant une durée prédéterminée le premier récepteur B1 en réponse à la réception du troisième signal S3 de déclenchement par le troisième récepteur B3 et pour éteindre le premier récepteur B1 lorsque le premier signal S1 a été reçu par le premier récepteur B1 un nombre de fois supérieur ou égal à un.

Suivant un mode de réalisation, le troisième canal de communication est différent du premier canal de communication au moins en ce que le troisième récepteur B3 a, à durée de mise en marche égale, une consommation énergétique inférieure à celle du premier récepteur B1. Le dispositif 100 de mise à jour comporte par exemple un émetteur A8 apte à émettre le troisième signal S3 dans le troisième canal de communication sans fil. Le troisième signal S3 est donc un signal de déclenchement ou de réveil du premier récepteur B1. L'émetteur A8 est par exemple muni d'une ou plusieurs antennes 28 utilisées pour envoyer, par une liaison radio sans fil, le signal S3 au récepteur B3. Le récepteur B3 est par exemple muni d'une ou plusieurs antennes 33 utilisées pour recevoir, par une liaison radio sans fil, le signal S3. L'émetteur A8 est connecté au système D, par exemple de manière filaire.

Dans un mode de réalisation, le troisième émetteur A8 comporte une base de temps BT ou horloge BT et le troisième signal S3 de déclenchement émis par le huitième émetteur A8 est un signal de synchronisation de la borne B communicante d'information sans fil sur des instants prescrits dans la base de temps BT ou horloge BT.

Ce signal de synchronisation permet de déterminer à quel moment le premier récepteur B1 doit être mis en marche (c'est-à-dire se mettre à l'écoute) d'une mise à jour envoyée par le premier signal S1. La base de temps BT ou horloge BT peut par exemple être prévue dans le système D de traitement, connecté au huitième émetteur A8.

Suivant un mode de réalisation, la borne B communicante d'information sans fil comporte un quatrième émetteur B4 et un cinquième récepteur B5, le quatrième émetteur B4 étant apte à émettre un quatrième signal S4 contenant une deuxième donnée T2 selon un quatrième canal de communication sans fil de type NFC, en réponse à la réception d'un cinquième signal S5 d'interrogation par le cinquième récepteur B5 selon le quatrième canal de communication sans fil de type NFC. NFC est l'abréviation de Near Field Communication en anglais ou communication en champ proche.

Suivant un mode de réalisation, la borne B communicante d'information sans fil comporte une mémoire 13 apte à enregistrer une deuxième information T2 correspondant au nombre de fois T2 que le quatrième émetteur B4 émet le quatrième signal S4 et/ou à la deuxième donnée T2.

Suivant un mode de réalisation, le dispositif 100 de mise à jour comporte un neuvième émetteur A9 apte à émettre le cinquième signal S5 d'interrogation selon le quatrième canal de communication sans fil de type NFC à destination du cinquième récepteur B5 de la borne B communicante d'information sans fil et comporte également un dixième récepteur E10 apte à recevoir selon le quatrième canal de communication sans fil de type NFC le quatrième signal S4 contenant la deuxième donnée T2 de la borne B, envoyée par le quatrième émetteur B4 de celle-ci. L'émetteur B4 est par exemple muni d'une ou plusieurs antennes 24 utilisées pour envoyer, par une liaison radio sans fil, le signal S4 au récepteur E10. L'émetteur A9 et le récepteur E10 sont connectés au système D, par exemple par une liaison sans fil, qui n'est pas de type NFC. L'émetteur A9 et/ou le récepteur E10 est par exemple compris dans le boîtier d'un terminal T mobile (par exemple un téléphone mobile ou un terminal sans fil), séparé d'un autre boîtier des autres éléments (C, D, 21, 22, 23, ...) du dispositif 100.

Le récepteur E10 est par exemple muni d'une ou plusieurs antennes 40 utilisées pour recevoir, par une liaison radio sans fil, le signal S4. L'émetteur A9 est par exemple muni d'une ou plusieurs antennes 41 utilisées pour envoyer, par une liaison radio sans fil, le signal S5 au récepteur B5. Le récepteur B5 est par exemple muni d'une ou plusieurs antennes 25 utilisées pour recevoir, par une liaison radio sans fil, le signal S5.

Par exemple, le neuvième émetteur A9 et le dixième récepteur E10 font partie du terminal T mobile sans fil, par exemple un téléphone portable T ou un lecteur portable T ou autre. Ce terminal T est donc du type NFC. Dans le cas d'une étiquette électronique B de rayon, lors du prélèvement d'une marchandise du rayon sur lequel se trouve l'étiquette B, le client peut scanner par son terminal T l'étiquette en envoyant le signal S5 et recevant le signal S4, pour générer la donnée T2 de transaction. Cette donnée T2 de transaction peut être enregistrée et/ou comptabilisée par l'étiquette B. Dans le cas où la donnée T2 de transaction est enregistrée dans la mémoire 13, l'étiquette peut reporter la donnée T2 de transaction au dispositif 100 dans le deuxième signal S2, en association avec par exemple un identifiant IDL du terminal T comportant le récepteur A9 et l'émetteur E10 et/ou l'instant d'émission ou de réception de ce terminal T (date et/ou heure par exemple). Dans le cas où le nombre de fois T2 que le quatrième émetteur B4 émet le quatrième signal S4 est comptabilisé par l'étiquette B, l'étiquette B peut communiquer ce nombre T2 compté de marchandises ou de produits prélevés dans le rayon, ce nombre T2 étant dans le signal S2 envoyé. Cette information T2 peut permettre d'anticiper une pénurie de produits et d'optimiser la gestion des réapprovisionnements plus rapidement.

Le terminal T du type NFC permet par exemple au client d'enregistrer sur celui-ci son achat ou son intention d'achat en enregistrant les informations contenues dans le quatrième signal S4, pouvant comprendre la première information I1 et/ou les premières données D1. En outre, le cinquième signal S5 peut contenir un troisième identifiant IDL de l'émetteur A9 ou du terminal T ou équipement T le comportant et/ou un identifiant IDL préenregistré dans ce terminal T, pouvant également être un identifiant IDL de la personne utilisant ce terminal T ou équipement T.

Suivant un mode de réalisation, la borne B communicante d'information sans fil comporte un sixième émetteur B6 apte à émettre un sixième signal S6 contenant une troisième donnée T3 selon un sixième canal de communication sans fil dans la bande de fréquence ISM, pouvant être par exemple de 2.4 GHz à 2.485 GHz à des instants prescrits dans une base BT2 de temps prédéterminée.

Suivant un mode de réalisation, la borne B communicante d'information sans fil comporte un septième récepteur B7 selon le sixième canal de communication sans fil dans la bande de fréquence ISM, pouvant être par exemple de 2.4 GHz à 2.485 GHz.

Suivant un mode de réalisation, la borne B communicante d'information sans fil comporte un sixième émetteur B6 et un septième récepteur B7, le sixième émetteur B6 étant apte à émettre un sixième signal S6 contenant une troisième donnée T3 selon un sixième canal de communication sans fil dans la bande de fréquence ISM, pouvant être par exemple de 2.4 GHz à 2.485 GHz, en réponse à la réception d'un septième signal S7 d'interrogation par le septième récepteur B7 selon le sixième canal de communication sans fil dans la bande de fréquence ISM, pouvant être par exemple de 2.4 GHz à 2.485 GHz. Le sixième émetteur B6, le septième récepteur B7 et le sixième canal de communication sont par exemple du type à courte portée, par exemple ayant une portée comprise entre 1 et 50 mètres ou entre 1 et 10 mètres, en étant par exemple du type Bluetooth (marque déposée), notamment Bluetooth LE ou BLE.

Suivant un mode de réalisation, la borne B communicante d'information sans fil comporte une mémoire 13 dans laquelle est enregistré un premier identifiant ID1 de la borne B communicante d'information sans fil et/ou une troisième information, le sixième signal S6 émis par le sixième émetteur B6 contenant le premier identifiant ID1 de la borne B communicante d'information sans fil et/ou la troisième information.

Suivant un mode de réalisation, la borne B communicante d'information sans fil comporte une mémoire 13 apte à enregistrer une quatrième information T3 correspondant au nombre de fois T3 que le sixième émetteur B6 émet le sixième signal S6 et/ou à la troisième donnée T3.

Suivant un mode de réalisation, le deuxième signal S2 contient en outre la deuxième ou quatrième information T2, T3.

Suivant un mode de réalisation, la borne B communicante d'information sans fil comporte un moyen 16 d'analyse du cinquième et/ou septième signal S5, S7 d'interrogation reçu par le cinquième et/ou septième récepteur B5, B7 pour en extraire le troisième identifiant IDL de l'équipement A4, A6 l'ayant émis, le deuxième signal S2 contenant en outre ce troisième identifiant IDL.

Suivant un mode de réalisation, le dispositif 100 de mise à jour comporte un douzième récepteur E12 apte à recevoir un sixième signal S6 contenant une troisième donnée T3 de la borne B communicante d'information sans fil selon un sixième canal de communication sans fil dans la bande de fréquence ISM, pouvant être par exemple de 2.4 GHz à 2.485 GHz.

Suivant un mode de réalisation, le dispositif 100 de mise à jour comporte comporte un onzième émetteur A11 apte à émettre un septième signal S7 selon un sixième canal de communication sans fil dans la bande de fréquence ISM, pouvant être par exemple de 2.4 GHz à 2.485 GHz à destination de la borne B communicante d'information sans fil.

Suivant un mode de réalisation, le dispositif 100 de mise à jour comporte comporte un onzième émetteur A11 apte à émettre un septième signal S7 d'interrogation selon le sixième canal de communication sans fil dans la bande de fréquence ISM, pouvant être par exemple de 2.4 GHz à 2.485 GHz à destination de la borne B communicante d'information sans fil et un douzième récepteur E12 apte à recevoir un sixième signal S6 contenant une troisième donnée T3 de la borne B communicante d'information sans fil selon le sixième canal de communication sans fil dans la bande de fréquence ISM, pouvant être par exemple de 2.4 GHz à 2.485 GHz.

L'émetteur B6 est par exemple muni d'une ou plusieurs antennes 26 utilisées pour envoyer, par une liaison radio sans fil, le signal S6 au récepteur E12. Le récepteur E12 est par exemple muni d'une ou plusieurs antennes 42 utilisées pour recevoir, par une liaison radio sans fil, le signal S6. L'émetteur A11 est par exemple muni d'une ou plusieurs antennes 43 utilisées pour envoyer, par une liaison radio sans fil, le signal S7 au récepteur B7. Le récepteur B7 est par exemple muni d'une ou plusieurs antennes 27 utilisées pour recevoir, par une liaison radio sans fil, le signal S7. L'émetteur A11 et le récepteur E12 sont connectés au système D, par exemple de manière filaire.

L'émetteur A est utilisé pour transmettre une mise à jour D1 des informations contenues dans et/ou à afficher par la ou les bornes B communicantes d'information sans fil. Le flux d'informations S1 et /ou S3 est diffusé par l'émetteur A et/ou l'émetteur A8 à une borne B communicante d'information sans fil, ou à plusieurs bornes B communicantes d'information sans fil B, B'. Le premier signal S1 contient l'identifiant ID2, ainsi que les premières données D1. L'identifiant ID2 peut éventuellement correspondre à plusieurs bornes B communicantes d'information sans fil B, B', c'est-à-dire être égal à l'identifiant ID1 enregistré dans plusieurs bornes B communicantes d'information sans fil B, B' différentes.

La réponse S2 de la borne B communicante d'information sans fil au signal S1 est captée par le récepteur 20 qui localise la source de l'émission de chaque signal S2, à savoir la borne B communicante d'information sans fil, et donc détermine les coordonnées de chaque la borne B communicante d'information sans fil. L'information de localisation obtenue par le système D de localisation est utilisée par exemple également pour vérifier qu'aucune erreur de placement de la borne B communicante d'information sans fil n'a été commise.

Dans une phase de configuration, l'émetteur A peut interroger par le signal S1 les bornes B communicantes d'information sans fil pour recueillir par le dispositif 100 de mise à jour les coordonnées des bornes B communicantes d'information sans fil et comparer ces coordonnées à une base de données E décrivant l'organisation des rayons ou objets sur lesquels ou près desquels sont fixées les bornes B communicantes d'information sans fil. La base de données E est une mémoire enregistrant en association les identifiants ID1 des bornes B communicantes d'information sans fil en association avec les coordonnées de l'endroit où se trouve la borne B communicante d'information sans fil, et éventuellement en association avec d'autres informations, par exemple sur l'objet, produit ou marchandise devant se trouver en cet endroit, l'information I1 pouvant être par exemple un prix, un descriptif ou autre. A partir de cette comparaison, le système D peut automatiquement associer l'identifiant ID1 de la borne B communicante d'information sans fil à un objet, un produit ou une marchandise.

Dans le cas d'une étiquette B électronique de rayon, l'association d'une information temporelle à la transaction (par exemple transaction de prélèvement d'un produit du rayon par un client) permet également de valider le prix du produit en cas de changement dynamique du prix (par exemple en cas de vente flash ou de période de promotion). Ainsi, l'information T2, T3 de transaction peut comporter une information temporelle. Le prix pourrait également être ajusté automatiquement après un événement (par exemple prix spécial pour une quantité limitée de produit). Il peut ainsi être prévu un marquage temporel de la prise d'un produit par un client (par exemple vente flash, c'est-à-dire pendant une durée limitée).

Le premier signal S1 selon le premier canal de communication déterminé sans fil est de type ultra-large bande. Suivant un mode de réalisation, la borne B pourrait également décider d'elle-même de transmettre des informations suivant une base de temps BT2 prédéterminée propre à la borne. Suivant un mode de réalisation, la borne B communicante d'information sans fil comporte une base BT2 de temps prédéterminée, le deuxième émetteur B2 et/ou le quatrième émetteur B4 et/ou le sixième émetteur B6 étant apte à émettre le deuxième signal S2 et/ou le quatrième signal S4 et/ou le sixième signal S6 à des instants prescrits dans la base BT2 de temps prédéterminée.

Par exemple, les instants sont périodiques dans la base BT2 et/ou BT de temps.

Suivant un mode de réalisation, la borne B pourrait également renvoyer un message suivant l'arrivée d'un événement :
- Batterie faible
- Nombre de transactions dépassant un seuil prédéterminé (par exemple programmé dans la borne B).

Suivant un mode de réalisation, le deuxième signal S2 et/ou le quatrième signal S4 et/ou le sixième signal S6 comportent au moins une cinquième information choisie parmi :
- une indication de niveau bas de l'alimentation électrique fournie par une source d'alimentation électrique autonome, que comporte la borne B communicante d'information sans fil,
- une indication qu'un nombre d'émission du deuxième signal S2 et/ou du quatrième signal S4 et/ou du sixième signal S6 dépasse un seuil préenregistré dans la borne B communicante d'information sans fil.

## Revendications

1. Borne communicante (B) d'information sans fil, comportant un organe (11) de fourniture d'une première information (I1) vers l'extérieur, un premier récepteur (B1) de type ultra-large bande, apte à recevoir un premier signal (S1) contenant des premières données (D1) selon un premier canal de communication déterminé sans fil de type ultra-large bande, une unité (12) de commande pour générer la première information (I1) à envoyer à l'organe (11) de fourniture en fonction des premières données (D1) reçues par le premier récepteur (B1),
la borne (B) comportant en outre au moins un deuxième émetteur (B2) apte à émettre un deuxième signal (S2) selon un deuxième canal de communication déterminé sans fil et de type ultra-large bande,
l'unité de commande étant configurée pour provoquer l'émission du deuxième signal (S2) par le deuxième émetteur (B2) en réponse à la réception du premier signal (S1) par le premier récepteur (B1),
**caractérisé en ce que** la borne (B) comporte en outre un troisième récepteur (B3) pour recevoir selon un troisième canal de communication sans fil un troisième signal (S3) de déclenchement, l'unité de commande étant configurée pour, en réponse à la réception du troisième signal (S3) de déclenchement par le troisième récepteur (B3), mettre en marche pendant une durée prédéterminée le premier récepteur (B1) de type ultra-large bande pour lui faire recevoir le premier signal (S1) contenant des premières données (D1) selon le premier canal de communication déterminé sans fil de type ultra-large bande,
le troisième canal de communication étant différent du premier canal de communication au moins **en ce que** le troisième récepteur (B3) a, à durée de mise en marche égale, une consommation énergétique inférieure à celle du premier récepteur (B1).

2. Borne suivant la revendication 1, **caractérisée en ce que** la borne comporte une mémoire (13) dans laquelle est enregistré un premier identifiant (ID1) de la borne, le deuxième signal (S2) émis par le deuxième émetteur (B2) contenant le premier identifiant (ID1) de la borne.

3. Borne suivant l'une quelconque des revendications précédentes, **caractérisée en ce que** le premier récepteur (B1) est apte à recevoir selon le premier canal de communication déterminé sans fil le premier signal (S1) contenant, en plus des premières données (D1), un deuxième identifiant (ID2) associé aux premières données (D1).

4. Borne suivant la revendication 1, **caractérisée en ce que**
la borne comporte une mémoire (13) dans laquelle est enregistré un premier identifiant (ID1) de la borne,
le premier récepteur (B1) est apte à recevoir selon le premier canal de communication déterminé sans fil le premier signal (S1) contenant, en plus des premières données, un deuxième identifiant (ID2) associé aux premières données (D1),
l'unité (12) de commande comportant un moyen (14) pour vérifier si le deuxième identifiant (ID2) contenu dans le premier signal (S1) reçu en association avec les premières données (D1) correspond au premier identifiant (ID1) de la borne, et un moyen (15) pour provoquer, en réponse à la réception des premières données (D1) par le premier récepteur (B1):
- dans l'affirmative,
l'enregistrement des premières données (D1) associées au deuxième identifiant (ID2) dans une mémoire (13),
la génération de la première information (I1) en fonction de ces premières données (D1) associées au deuxième identifiant (ID2) dans la mémoire (13),
la fourniture par l'organe (11) de la première information (I1) vers l'extérieur,
l'émission, par le deuxième émetteur (B2), du deuxième signal (S2) contenant au moins le premier identifiant (ID1) de la borne (B) et une indication (IMC) de mise à jour correcte des premières données (D1),
- dans la négative, ne pas provoquer cet enregistrement, cette génération, cette fourniture et cette émission.

5. Borne suivant l'une quelconque des revendications 1 à 4, **caractérisée en ce que** l'unité de commande est configurée pour éteindre le premier récepteur (B1) après la durée prédéterminée.

6. Borne suivant l'une quelconque des revendications 1 à 4, **caractérisée en ce que** l'unité de commande étant configurée pour éteindre le premier récepteur (B1) lorsque le premier signal (S1) a été reçu par le premier récepteur (B1).

7. Borne suivant l'une quelconque des revendications 1 à 4, **caractérisée en ce que** l'unité de commande étant configurée pour éteindre le premier récepteur (B1) lorsque le premier signal (S1) a été reçu par le premier récepteur (B1) un nombre de fois supérieur ou égal à un.

8. Borne suivant l'une quelconque des revendications précédentes, **caractérisée en ce que** la borne comporte un quatrième émetteur (B4) et un cinquième récepteur (B5), le quatrième émetteur (B4) étant apte à émettre un quatrième signal (S4) contenant une deuxième donnée (T2) selon un quatrième canal de communication sans fil de type NFC, en réponse à la réception d'un cinquième signal (S5) d'interrogation par le cinquième récepteur (B5) selon le quatrième canal de communication sans fil de type NFC.

9. Borne suivant la revendication 8, **caractérisée en ce que** la borne comporte une mémoire (13) apte à enregistrer une deuxième information correspondant au nombre de fois que le quatrième émetteur (B4) émet le quatrième signal (S4) et/ou à la deuxième donnée (T2).

10. Borne suivant l'une quelconque des revendications 1 à 9, **caractérisée en ce que** la borne (B) comporte un sixième émetteur (B6) et un septième récepteur (B7), le sixième émetteur (B6) étant apte à émettre un sixième signal (S6) contenant une troisième donnée (T3) selon un sixième canal de communication sans fil dans la bande de fréquence ISM, en réponse à la réception d'un septième signal (S7) d'interrogation par le septième récepteur (B7) selon le sixième canal de communication sans fil dans la bande de fréquence ISM.

11. Borne suivant l'une quelconque des revendications 1 à 10, **caractérisée en ce qu'**elle comporte comme organe (11) de fourniture de la première information (I1) vers l'extérieur le deuxième émetteur (B2) apte à émettre vers l'extérieur le deuxième signal (S2) contenant la première information (I1) selon le deuxième canal de communication déterminé sans fil et de type ultra-large bande.

12. Borne suivant l'une quelconque des revendications 8 et 9, **caractérisée en ce que** l'organe (11) de fourniture de la première information (I1) vers l'extérieur est le quatrième émetteur (B4) apte à émettre vers l'extérieur le quatrième signal (S4) contenant la première information (I1) selon le quatrième canal de communication sans fil de type NFC.

13. Borne suivant la revendication 10, **caractérisée en ce que** l'organe (11) de fourniture de la première information (I1) vers l'extérieur est le sixième émetteur (B6) apte à émettre vers l'extérieur le sixième signal (S6) contenant la première information (I1) selon le quatrième canal de communication sans fil dans la bande de fréquence ISM.

14. Borne suivant l'une quelconque des revendications précédentes, **caractérisée en ce que** le deuxième signal (S2) et/ou le quatrième signal (S4) et/ou le sixième signal (S6) comportent au moins une cinquième information choisie parmi :
- une indication de niveau bas de l'alimentation électrique fournie par une source d'alimentation électrique autonome, que comporte la borne (B),
- une indication qu'un nombre d'émission du deuxième signal (S2) et/ou du quatrième signal (S4) et/ou du sixième signal (S6) dépasse un seuil préenregistré dans la borne (B).

15. Dispositif (100) de mise à jour d'au moins une borne communicante (B) sans fil d'information selon l'une quelconque des revendications précédentes,
le dispositif comportant au moins un premier émetteur (A) du premier signal (S1) selon le premier canal de communication déterminé sans fil de type ultra-large bande à destination du premier récepteur (B1) de type ultra-large bande de la borne communicante (B) sans fil d'information,
le dispositif comportant en outre au moins un deuxième récepteur (20, C, 21, 22, 23) pour recevoir le deuxième signal (S2) selon le deuxième canal de communication déterminé sans fil et de type ultra-large bande,
le deuxième récepteur (20, C, 21, 22, 23) étant connecté à une unité (D) de traitement du signal (S2) reçu par le deuxième récepteur (20, C, 21, 22, 23),
**caractérisé en ce qu'**il comporte au moins un huitième émetteur (A8) apte à émettre un troisième signal (S3) de déclenchement selon le troisième canal de communication déterminé sans fil à destination du troisième récepteur (B3) de la borne communicante (B) sans fil d'information, de manière à ce que le troisième signal (S3) de déclenchement émis par le huitième émetteur (A8) selon le troisième canal de communication différent du premier canal de communication engendre une consommation énergétique du troisième récepteur (B3), inférieure à la consommation énergétique du premier récepteur (B1), engendrée par le premier signal (S1) émis par le premier émetteur (A) selon le premier canal de communication,
le troisième signal (S3) de déclenchement étant apte à déclencher la mise en marche du premier récepteur (B1) de type ultra-large bande de la borne (B), pour lui faire recevoir le premier signal (S1) contenant des premières données (D1) selon le premier canal de communication déterminé sans fil de type ultra-large bande.

## Patentansprüche

1. Drahtloses Informationskommunikationsendgerät (B), umfassend ein Element (11) zum Bereitstellen einer ersten Information (I1) nach außen, einen ersten Empfänger (B1) vom Ultrabreitbandtyp, der in der Lage ist, ein erstes Signal (S1) zu empfangen, das erste Daten (D1) gemäß einem ersten bestimmten drahtlosen Kommunikationskanal vom Ultrabreitbandtyp beinhaltet, eine Steuereinheit (12) zum Erzeugen der ersten Information (I1), zum Versenden an das Element (11) zum Bereitstellen auf Grund der ersten Daten (D1), die vom ersten Empfänger (B1) empfangen wurden,
wobei das Endgerät (B) ferner mindestens einen zweiten Sender (B2) umfasst, der in der Lage ist, ein zweites Signal (S2) gemäß einem zweiten bestimmten drahtlosen Kommunikationskanal, und vom Ultrabreitbandtyp, zu senden, wobei
die Steuereinheit konfiguriert ist, um die Sendung des zweiten Signals (S2) durch den zweiten Sender (B2) als Reaktion auf den Empfang des ersten Signals (S1) durch den ersten Empfänger (B1) zu bewirken,
**dadurch gekennzeichnet, dass** das Endgerät (B) ferner einen dritten Empfänger (B3) zum Empfangen eines dritten Auslösesignals (S3) gemäß einem dritten drahtlosen Kommunikationskanal umfasst, wobei die Steuereinheit konfiguriert ist, um als Reaktion auf den Empfang des dritten Auslösesignals (S3) durch den dritten Empfänger (B3) den ersten Empfänger (B1) vom Ultrabreitbandtyp für einen vorbestimmten Zeitraum einzuschalten, um das erste Signal (S1) zu empfangen, das erste Daten (D1) gemäß dem ersten bestimmten drahtlosen Kommunikationskanal, vom Ultrabreitbandtyp, beinhaltet,
wobei sich der dritte Kommunikationskanal von dem ersten Kommunikationskanal zumindest dadurch unterscheidet, dass der dritte Empfänger (B3) für die gleiche Einschaltzeit einen geringeren Energieverbrauch als der erste Empfänger (B1) aufweist.

2. Endgerät nach Anspruch 1, **dadurch gekennzeichnet, dass** das Endgerät einen Speicher (13) umfasst, in dem ein erster Identifikator (ID1) des Endgeräts erfasst wird, wobei das zweite Signal (S2), das von dem zweiten Sender (B2) gesendet wird, den ersten Identifikator (ID1) des Endgeräts beinhaltet.

3. Endgerät nach einem der vorhergehenden Ansprüche, **dadurch gekennzeichnet, dass** der erste Empfänger (B1) in der Lage ist, gemäß dem ersten bestimmten drahtlosen Kommunikationskanal das erste Signal (S1) zu empfangen, das zusätzlich zu den ersten Daten (D1) einen zweiten Identifikator (ID2) beinhaltet, der den ersten Daten (D1) zugeordnet ist.

4. Endgerät nach Anspruch 1, **dadurch gekennzeichnet, dass**
das Endgerät einen Speicher (13) umfasst, in dem ein erster Identifikator (ID1) des Endgeräts erfasst wird, wobei der erste Empfänger (B1) in der Lage ist, gemäß dem ersten bestimmten drahtlosen Kommunikationskanal das erste Signal (S1) zu empfangen, das zusätzlich zu den ersten Daten einen zweiten Identifikator (ID2) beinhaltet, der den ersten Daten (D1) zugeordnet ist,
die Steuereinheit (12) ein Mittel (14) umfasst, zum Überprüfen, ob der zweite Identifikator (ID2), der in dem ersten Signal (S1) enthalten ist, das in Verbindung mit den ersten Daten (D1) empfangen wurde, dem ersten Identifikator (ID1) des Endgeräts entspricht, und ein Mittel (15) umfasst, um als Reaktion auf den Empfang der ersten Daten (D1) durch den ersten Empfänger (B1) zu bewirken:
- wenn ja,
die Erfassung der ersten Daten (D1), die dem zweiten Identifikator (ID2) zugeordnet sind, in einem Speicher (13),
das Erzeugen der ersten Information (I1) auf Grund von den ersten Daten (D1), die dem zweiten Identifikator (ID2) zugeordnet sind, in dem Speicher (13),
die Bereitstellung der ersten Information (I1) durch das Element (11) nach außen,
das Senden des zweiten Signals (S2) durch den zweiten Sender (B2), das mindestens den ersten Identifikator (ID1) des Endgerätes (B) und eine Anzeige (IMC) für die korrekte Aktualisierung der ersten Daten (D1) beinhaltet,
- wenn nicht, wird diese Erfassung, Erzeugung, Bereitstellung und Senden nicht bewirkt.

5. Endgerät nach einem der Ansprüche 1 bis 4, **dadurch gekennzeichnet, dass** die Steuereinheit konfiguriert ist, um den ersten Empfänger (B1) nach dem vorbestimmten Zeitraum auszuschalten.

6. Endgerät nach einem der Ansprüche 1 bis 4, **dadurch gekennzeichnet, dass** die Steuereinheit konfiguriert ist, um den ersten Empfänger (B1) auszuschalten, wenn das erste Signal (S1) vom ersten Empfänger (B1) empfangen wurde.

7. Endgerät nach einem der Ansprüche 1 bis 4, **dadurch gekennzeichnet, dass** die Steuereinheit konfiguriert ist, um den ersten Empfänger (B1) auszuschalten, wenn das erste Signal (S1) vom ersten Empfänger (B1) mit einer Häufigkeit größer oder gleich eins empfangen wurde.

8. Endgerät nach einem der vorhergehenden Ansprüche, **dadurch gekennzeichnet, dass** das Endgerät einen vierten Sender (B4) und einen fünften Empfänger (B5) umfasst, wobei der vierte Sender (B4) in der Lage ist, ein viertes Signal (S4) zu senden, das zweite Daten (T2) gemäß einem vierten drahtlosen NFC-Kommunikationskanal beinhaltet, als Reaktion auf den Empfang eines fünften Abfragesignals (S5) durch den fünften Empfänger (B5) gemäß dem vierten drahtlosen NFC-Kommunikationskanal.

9. Endgerät nach Anspruch 8, **dadurch gekennzeichnet, dass** das Endgerät einen Speicher (13) umfasst, der in der Lage ist, eine zweite Information zu registrieren, die der Häufigkeit entspricht, mit der der vierte Sender (B4) das vierte Signal (S4) und/oder die zweiten Daten (T2) sendet.

10. Endgerät nach einem der Ansprüche 1 bis 9, **dadurch gekennzeichnet, dass** das Endgerät (B) einen sechsten Sender (B6) und einen siebten Empfänger (B7) umfasst, wobei der sechste Sender (B6) in der Lage ist, ein sechstes Signal (S6) zu senden, das dritte Daten (T3) beinhaltet, gemäß einem sechsten drahtlosen Kommunikationskanal im ISM-Frequenzband, als Reaktion auf den Empfang eines siebten Abfragesignals (S7) durch den siebten Empfänger (B7) gemäß dem sechsten drahtlosen Kommunikationskanal im ISM-Frequenzband.

11. Endgerät nach einem der Ansprüche 1 bis 10, **dadurch gekennzeichnet, dass** es als Element (11) zum Bereitstellen der ersten Information (I1) nach außen den zweiten Sender (B2) umfasst, der in der Lage ist, das zweite Signal (S2), das die erste Information (I1) beinhaltet, nach außen zu senden, gemäß dem zweiten bestimmten drahtlosen Kommunikationskanal und vom Ultrabreitbandtyp.

12. Endgerät nach einem der Ansprüche 8 und 9, **dadurch gekennzeichnet, dass** das Element (11) zum Bereitstellen der ersten Information (I1) nach außen der vierte Sender (B4) ist, der in der Lage ist, das vierte Signal (S4), das die erste Information (I1) beinhaltet, gemäß dem vierten drahtlosen NFC-Kommunikationskanal nach außen zu senden.

13. Endgerät nach Anspruch 10, **dadurch gekennzeichnet, dass** das Element (11) zum Bereitstellen der ersten Information (I1) nach außen der sechste Sender (B6) ist, der in der Lage ist, das sechste Signal (S6), das die erste Information (I1) beinhaltet, gemäß dem vierten drahtlosen Kommunikationskanal im ISM-Frequenzband nach außen zu senden.

14. Endgerät nach einem der vorhergehenden Ansprüche, **dadurch gekennzeichnet, dass** das zweite Signal (S2) und/oder das vierte Signal (S4) und/oder das sechste Signal (S6) mindestens eine fünfte Information umfassen, ausgewählt aus:
- eine Niedrigpegelanzeige von einer Stromversorgung, die von einer autonomen Stromversorgungsquelle bereitgestellt wird, die das Endgerät (B) umfasst,
- eine Anzeige, dass eine Anzahl von Sendungen des zweiten Signals (S2) und/oder des vierten Signals (S4) und/oder des sechsten Signals (S6) einen im Endgerät (B) vorab erfassten Schwellenwert überschreitet.

15. Vorrichtung (100) zum Aktualisieren von mindestens einem drahtlosen Informationskommunikationsendgerät (B) gemäß einem der vorherigen Ansprüche, wobei
die Vorrichtung mindestens einen ersten Sender (A) des ersten Signals (S1) gemäß dem ersten bestimmten drahtlosen Kommunikationskanal vom Ultrabreitbandtyp für den ersten Empfänger (B1) vom Ultrabreitbandtyp des drahtlosen Informationskommunikationsendgerätes (B) umfasst, wobei
die Vorrichtung ferner mindestens einen zweiten Empfänger (20, C, 21, 22, 23) zum Empfangen des zweiten Signals (S2) gemäß dem zweiten bestimmten drahtlosen Kommunikationskanal vom Ultrabreitbandtyp umfasst,
wobei der zweite Empfänger (20, C, 21, 22, 23) mit einer Einheit (D) zum Verarbeiten des vom zweiten Empfänger (20, C, 21, 22, 23) empfangenen Signals (S2) verbunden ist,
**dadurch gekennzeichnet, dass** sie mindestens einen achten Sender (A8) umfasst, der in der Lage ist, ein drittes Auslösesignal (S3) gemäß dem dritten bestimmten drahtlosen Kommunikationskanal an den dritten Empfänger (B3) des drahtlosen Informationskommunikationsendgerätes (B) zu senden, so dass das
dritte Auslösesignal (S3), das vom achten Sender (A8) gemäß dem dritten Kommunikationskanal, der sich vom ersten Kommunikationskanal unterscheidet, einen Energieverbrauch des dritten Empfängers (B3) generiert, der niedriger ist als der Energieverbrauch des ersten Empfängers (B1), der durch das erste Signal (S1) generiert wird, das vom ersten Sender (A) gemäß dem ersten Kommunikationskanal gesendet wird,
wobei das dritte Auslösesignal (S3) in der Lage ist, den Start des ersten Empfängers (B1) vom Ultrabreitbandtyp des Endgeräts (B) auszulösen, um das erste Signal (S1) zu empfangen, das erste Daten (D1) gemäß dem ersten bestimmten drahtlosen Kommunikationskanal vom Ultrabreitbandtyp, beinhaltet.

## Claims

1. A wireless information communication terminal (B) comprising a component (11) for outputting a first piece of information (11), a first receiver (B1) of the ultra-wide band type capable of receiving a first signal (S1) containing first data (D1) along a determined first wireless communication channel of the ultra-wide band type, a control unit (12) for generating the first piece of information (11) to be sent to the outputting component (11) depending on the first data (D1) received by the first receiver (B1),
the terminal (B) further comprising at least one second emitter (B2) capable of emitting a second signal (S2) along a determined second wireless communication channel of the ultra-wide band type,
the control unit being configured to bring about the emission of the second signal (S2) by the second emitter (B2) in response to the first receiver (B1) receiving the first signal (S1),
**characterized in that** the terminal (B) further comprises a third receiver (B3) for receiving (S3) along a third wireless communication channel a third trigger signal, the control unit being configured to activate, in response to the third receiver (B3) receiving the third trigger signal (S3), for a predetermined period of time the first receiver (B1) of the ultra-wide band type so as to make said first receiver receive the first signal (S1) containing first data (D1) along the determined first wireless communication channel of the ultra-wide band type,
the third communication channel being different from the first communication channel at least **in that** the third receiver (B3) has, over the same activation period, lower energy consumption than that of the first receiver (B1).

2. The terminal according to claim 1, **characterized in that** the terminal comprises a memory (13) wherein a first identifier (ID1) of the terminal is stored, the second signal (S2) emitted by the second emitter (B2) containing the first identifier (ID1) of the terminal.

3. The terminal according to any one of the preceding claims, **characterized in that** the first receiver (B1) is capable of receiving along the first determined wireless communication channel the first signal (S1) containing, in addition to the first data (D1), a second identifier (ID2) associated with the first data (D1).

4. The terminal according to claim 1, **characterized in that**
the terminal comprises a memory (13) wherein a first identifier (ID1) of the terminal is stored,
the first receiver (B1) is capable of receiving along the determined first wireless communication channel the first signal (S1) containing, in addition to the first data, a second identifier (ID2) associated with the first data (D1),
the control unit (12) comprising a means (14) for verifying whether the second identifier (ID2) contained in the first signal (S1) received in conjunction with the first data (D1) corresponds to the first identifier (ID1) of the terminal, and a means (15) for bringing about, in response to the first receiver (B1) receiving the first data (D1):
- in the event of a positive result,
the storing of the first data (D1) associated with the second identifier (ID2) in a memory (13),
the generation of the first piece of information (11) on the basis of said first data (D1) associated with the second identifier (ID2) in the memory (13),
the output of the first piece of information (11) by the component (11),
the emission, by the second emitter (B2), of the second signal (S2) containing at least the first identifier (ID1) of the terminal (B) and an indication (IMC) that the first data (D1) have been correctly updated,
- in the event of a negative result, not to bring about said storage, generation, output and emission.

5. The terminal according to any one of claims 1 to 4, **characterized in that** the control unit is configured to switch off the first receiver (B1) after the predetermined period of time.

6. The terminal according to any one of claims 1 to 4, **characterized in that** the control unit is configured to switch off the first receiver (B1) when the first signal (S1) has been received by the first receiver (B1).

7. The terminal according to any one of claims 1 to 4, **characterized in that** the control unit is configured to switch off the first receiver (B1) when the first signal (S1) has been received by the first receiver (B1) a number of times greater or equal to one.

8. The terminal according to any one of the preceding claims, **characterized in that** the terminal comprises a fourth emitter (B4) and a fifth receiver (B5), the fourth emitter (B4) being capable of emitting a fourth signal (S4) containing a second item of data (T2) along a fourth wireless communication channel of the NFC type, in response to the fifth receiver (B5) receiving a fifth interrogation signal (S5) along the fourth communication channel of the NFC type.

9. The terminal according to claim 8, **characterized in that** the terminal comprises a memory (13) capable of storing a second piece of information corresponding to the number of times that the fourth emitter (B4) emits the fourth signal (S4) and/or to the second item of data (T2).

10. The terminal according to any one of claims 1 to 9, **characterized in that** the terminal (B) comprises a sixth emitter (B6) and a seventh receiver (B7), the sixth emitter (B6) being capable of emitting a sixth signal (S6) containing a third item of data (T3) along a sixth wireless communication channel in the ISM frequency band, in response to the seventh receiver (B7) receiving a seventh interrogation signal (S7) along the sixth wireless communication channel in the ISM frequency band.

11. The terminal according to any one of claims 1 to 10, **characterized in that** it comprises as a component (11) for outputting the first piece of information (11), the second emitter (B2) capable of externally emitting the second signal (S2) containing the first piece of information (11) along the determined second wireless communication channel of the ultra-wide band type.

12. The terminal according to any one of claims 8 and 9, **characterized in that** the component (11) for outputting the first piece of information (11) is the fourth emitter (B4) capable of externally emitting the fourth signal (S4) containing the first piece of information (11) along the fourth wireless communication channel of the NFC type.

13. The terminal according to claim 10, **characterized in that** the component (11) for outputting the first piece of information (11) is the sixth emitter (B6) capable of externally emitting the sixth signal (S6) containing the first piece of information (11) along the fourth wireless communication channel in the ISM frequency band.

14. The terminal according to any one of the preceding claims, **characterized in that** the second signal (S2) and/or the fourth signal (S4) and/or the sixth signal (S6) comprise at least a fifth piece of information selected from among:
- an indication of low electric power supply level provided by an independent electric power supply source comprised by the terminal (B),
- an indication that a number of emissions of the second signal (S2) and/or of the fourth signal (S4) and/or of the sixth signal (S6) has passed a threshold stored beforehand in the terminal (B).

15. A device (100) for updating at least one wireless information communication terminal (B) according to any one of the preceding claims,
the device comprising at least one first emitter (A) of the first signal (S1) along the determined first wireless communication channel of the ultra-wide band type to the first receiver (B1) of the ultra-wide band type of the wireless information communication terminal (B),
the device further comprising at least one second receiver (20, C, 21, 22, 23) for receiving the second signal (S2) along the determined second wireless communication channel of the ultra-wide band type,
the second receiver (20, C, 21, 22, 23) being connected to a unit (D) for processing the signal (S2) received by the second receiver (20, C, 21, 22, 23),
**characterized in that** it comprises at least one eighth emitter (A8) capable of emitting a third trigger signal (S3) along the determined third wireless communication channel to the third receiver (B3) of the wireless information communication terminal (B) in such a way that
the third, trigger signal (S3) emitted by the eighth emitter (A8) along the third communication channel different from the first communication channel leads to the third receiver (B3) having a lower energy consumption than the energy consumption of the first receiver (B1), which is caused by the first signal (S1) emitted by the first emitter (A) along the first communication channel,
the third trigger signal (S3) being capable of triggering the activation of the first receiver (B1) of the ultra-wide band type of the terminal (B), to make it receive the first signal (S1) containing first data (D1) along the determined first wireless communication channel of the ultra-wide band type.
